Europäisches Patentamt

European Patent Office

Office européen des brevets

(11) Numéro de publication : **0 057 146**
**B1**

(12) **FASCICULE DE BREVET EUROPÉEN**

(45) Date de publication du fascicule du brevet :
**13.06.84**

(21) Numéro de dépôt : **82400123.4**

(22) Date de dépôt : **22.01.82**

(51) Int. Cl.³ : **A 23 K  1/18**, A 23 K  1/16,
**A 23 K  1/165**

(54) Composition destinée à augmenter la production de lait chez les animaux en lactation et son procédé de préparation.

(30) Priorité : **28.01.81 FR 8101579**

(43) Date de publication de la demande :
**04.08.82 Bulletin 82/31**

(45) Mention de la délivrance du brevet :
**13.06.84 Bulletin 84/24**

(84) Etats contractants désignés :
**BE CH DE GB IT LI**

(56) Documents cités :
**US-A- 4 175 121**

(73) Titulaire : **TRANSEX S.A., Société dite:**
**F-86530 Usson du Poitou (FR)**

**AGRIMEL LIMITEE**
**745 rue Sainte Rose**
**La Prairie Quebec (CA)**

(72) Inventeur : **Mantha, Nagaraja S.**
**745 rue Ste Rose**
**La Prairie-Quebec (CA)**

(74) Mandataire : **Bressand, Georges et al**
**c/o CABINET LAVOIX 2 Place d'Estienne d'Orves**
**F-75441 Paris Cedex 09 (FR)**

## Description

La présente invention concerne une composition destinée à augmenter la production de lait et de gras de beurre chez les animaux en lactation, tels que les vaches laitières, les chèvres et les brebis.

Dans le brevet US. 4 175 121, on a déjà décrit une composition destinée à augmenter la production de lait chez les animaux en lactation qui comprend du 2-hydroxy-4-méthylthio-butyrate de calcium ou « Méthionine Hydroxy Analogue » de calcium, des enzymes constituées par des extraits d'Aspergillus Oryzae et de Bacillus Subtilis et des tampons constitués notamment par du bicarbonate de sodium.

La présente invention constitue un perfectionnement à cette composition et vise une composition à base de Méthionine Hydroxy Analogue, d'enzymes et de tampons qui permet encore d'améliorer la production de lait et de gras de beurre chez les animaux en lactation.

La présente invention a ainsi pour objet une composition destinée à augmenter la production de lait et de gras de beurre chez les animaux en lactation, du type comprenant du 2-hydroxy-4-méthylthio-butyrate de calcium, des enzymes et des tampons, caractérisée en ce qu'elle comprend pour 100 g de 2-hydroxy-4-méthylthio-butyrate de calcium :

| | |
|---|---|
| — bicarbonate de sodium : | de 10 à 100 g de préférence de 20 à 80 g |
| — oxyde de magnésium : | de 10 à 100 g, de préférence de 16 à 65 g |
| — bentonite sodique : | de 10 à 100 g, de préférence de 20 à 80 g |
| — amylase : | de 100 à 5 000 unités d'amylase |
| — protéase : | de 0,05 à 2 unités Anson |
| — cellulase : | de 100 à 5 000 unités de cellulase |

La combinaison de ces différents constituants dans les proportions indiquées permet d'obtenir un effet de synergie inattendu, c'est-à-dire un effet sur la production de lait et de gras de beurre plus favorable que celui qu'on peut obtenir avec les différents constituants de la composition pris séparément, tout particulièrement au début de la lactation, jusqu'au niveau maximal de la lactation, lorsque les animaux sont alimentés avec des rations élevées en énergie et basses en fourrage.

Cette combinaison permet également d'obtenir une production de lait et de gras de beurre plus importante que celle qu'on pouvait obtenir avec la composition décrite dans le brevet US. 4 175 121.

Le bicarbonate et l'oxyde de magnésium constituent des tampons pour la composition.

La bentonite sodique est une glaise de type Montmorrillonite relativement inerte qui est souvent utilisée comme liant pour la fabrication de pastilles.

Comme source d'amylase, on utilise avantageusement de l'amylase fongique obtenue à partir d'une culture d'Aspergillus Oryzae.

Comme source de protéase, on utilise avantageusement de la protéase bactérienne obtenue à partir d'une culture de Bacillus Subtilis.

Comme source de cellulase, on utilise avantageusement de la cellulase fongique obtenue à partir d'une culture de Trichoderma Viride.

La composition peut en outre contenir des agents aromatisants et des supports ou véhicules usuels.

La composition constitue un concentré qui peut être mélangé à la nourriture des animaux.

Pour obtenir une amélioration appréciable de la production de lait et de gras de beurre, il convient de donner à manger aux animaux la composition à raison d'environ 4 à 40 g/jour de Méthionine Hydroxy Analogue à chaque animal selon le poids des animaux. Ainsi, pour les vaches laitières, une quantité de 20 à 30 g/jour de Méthionine Hydroxy Analogue donne des résultats satisfaisants alors que pour les brebis et les chèvres il suffit d'environ 5 g/jour.

L'exemple suivant illustre la présente invention.

### Exemple

On prépare une composition comprenant en pourcentage en poids les constituants suivants :

| | % en poids |
|---|---|
| 2-hydroxy-4-méthylthio-butyrate de calcium | 25,00 |
| Bicarbonate de sodium | 10,00 |
| Oxyde de magnésium | 8,00 |
| Bentonite sodique | 10,00 |
| Amylase fongique d'Aspergillus Oryzae (à 1 600 unités d'amylase/g) | 0,064 |
| Protéase de Bacillus Subtilis (Neutrase) (à 1,5 unité Anson/g) | 0,032 |
| Cellulase de Trichoderma Viride (à 5 000 unités de cellulase/g) | 0,032 |
| Saveur d'érable | 2,30 |
| Support (soluble de distillerie) | 44,60 |

Pour préparer la composition, on procède de la façon suivante :

Dans un mélangeur on introduit successivement le 2-hydroxy-4-méthylthio-butyrate de calcium, le bicarbonate de sodium, l'oxyde de magnésium, la bentonite sodique, les sources d'amylase, de protéase et de cellulase et la saveur d'érable (sous forme de poudre qui est pulvérisée à sec). On mélange pendant au moins 5 minutes. Puis, on ajoute le support (soluble de distillerie) et l'on mélange pendant au moins dix minutes.

**Revendications**

1. Composition destinée à augmenter la production de lait et de gras de beurre chez les animaux en lactation, du type comprenant du 2-hydroxy-4-méthylthio-butyrate de calcium, des enzymes et des tampons, caractérisée en ce qu'elle comprend pour 100 g de 2-hydroxy-4-méthylthio-butyrate de calcium :

— bicarbonate de sodium :         de 10 à 100 g, de préférence de 20 à 80 g
— oxyde de magnésium :         de 10 à 100 g, de préférence de 16 à 65 g
— bentonite sodique :         de 10 à 100 g, de préférence de 20 à 80 g
— amylase :         de 100 à 5 000 unités d'amylase
— protéase :         de 0,05 à 2 unités Anson
— cellulase :         de 100 à 5 000 unités de cellulase.

2. Composition selon la revendication 1, caractérisée en ce qu'on utilise comme source d'amylase de l'amylase fongique obtenue à partir d'une culture d'Aspergillus Oryzae.

3. Composition selon la revendication 1 ou 2, caractérisée en ce qu'on utilise comme source de protéase de la protéase bactérienne obtenue à partir d'une culture de Bacillus Subtilis.

4. Composition selon l'une quelconque des revendications 1 à 3, caractérisée en ce qu'on utilise comme source de cellulase de la cellulase fongique obtenue à partir d'une culture de Trichoderma Viride.

5. Procédé pour améliorer la production de lait et du gras de beurre chez les animaux en lactation, caractérisé en ce que l'on donne à manger aux animaux une composition selon la revendication 1.

6. Procédé selon la revendication 5, caractérisé en ce que la composition est donnée à raison de 4 à 40 g de 2-hydroxy-4-méthylthio-butyrate de calcium par jour et par animal.

**Claims**

1. Composition for increasing the production of milk and butter fats in lactating animals, of the type comprising calcium 2-hydroxy-4-methylthiobutyrate, enzymes and buffers, characterized in that it comprises, per 100 g calcium 2-hydroxy-4-methylthio-butyrate :

— sodium bicarbonate :         10-100 g, preferably 20-80 g,
— magnesium oxide :         10-100 g, preferably 16-65 g,
— sodium bentonite :         10-100 g, preferably 20-80 g,
— amylase :         100-5 000 amylase units,
— protease :         0.05-2 Anson units,
— cellulase :         100-5 000 cellulase units.

2. Composition as claimed in claim 1, characterized in that fungal amylase obtained from a culture of Aspergillus oryzae is used as amylase source.

3. Composition as claimed in claim 1 or 2, characterized in that bacterial protease obtained from a culture of Bacillus subtilis is used as protease source.

4. Composition as claimed in any one of claims 1-3, characterized in that fungal cellulase obtained from a culture of Trichoderma viride is used as cellulase source.

5. Process for improving the production of milk and butter fats in lactating animals, characterized in that it comprises feeding the animals a composition as claimed in claim 1.

6. Process as claimed in claim 5, characterized in that the composition is administered at a rate of 4-40 g calcium 2-hydroxy-4-methylthio-butyrate per day and per animal.

**Ansprüche**

1. Zusammensetzung, die zur Steigerung der Milch- und Butterfettleistung bei milchgebenden Tieren bestimmt ist, vom Typ, der Calcium-2-hydroxy-4-methylthio-butyrat, Enzyme und Puffer enthält, dadurch gekennzeichnet, daß sie auf 100 g Calcium-2-hydroxy-4-methylthio-butyrat

**0 057 146**

| | |
|---|---|
| — Natriumbicarbonat : | 10 bis 100 g, vorzugsweise 20 bis 80 g, |
| — Magnesiumoxid : | 10 bis 100 g, vorzugsweise 16 bis 65 g, |
| — Natriumbentonit : | 10 bis 100 g, vorzugsweise 20 bis 80 g, |
| — Amylase : | 100 bis 5 000 Amylaseeinheiten, |
| — Protease : | 0,05 bis 2 Anson-Einheiten, |
| — Cellulase : | 100 bis. 5 000 Cellulaseeinheiten |

enthält.

2. Zusammensetzung nach Anspruch 1, dadurch gekennzeichnet, daß man als Amylasequelle Pilzamylase verwendet, die aus einer Kultur von Aspergillus oryzae erhalten worden ist.

3. Zusammensetzung nach Anspruch 1 oder 2, dadurch gekennzeichnet, daß man als Proteasequelle bakterielle Protease verwendet, die aus einer Kultur von Bacillus subtilis erhalten worden ist.

4. Zusammensetzung nach irgendeinem der Ansprüche 1 bis 3, dadurch gekennzeichnet, daß man als Cellulasequelle Pilzcellulase verwendet, die aus einer Kultur von Trichoderma viride erhalten worden ist.

5. Verfahren zur Verbesserung der Bildung von Milch und Butterfett bei milchgebenden Tieren, dadurch gekennzeichnet, daß man den Tieren eine Zusammensetzung nach Anspruch 1 zu fressen gibt.

6. Verfahren nach Anspruch 5, dadurch gekennzeichnet, daß die Zusammensetzung in einer Menge von 4 bis 40 g Calcium-2-hydroxy-4-methylthio-butyrat pro Tag und pro Tier gegeben wird.